(19) Europäisches Patentamt / European Patent Office / Office européen des brevets

(11) **EP 4 434 736 A1**

(12) **EUROPEAN PATENT APPLICATION**

(43) Date of publication:
**25.09.2024 Bulletin 2024/39**

(21) Application number: **24163679.4**

(22) Date of filing: **14.03.2024**

(51) International Patent Classification (IPC):
**B29D 11/00** (2006.01) **G02B 3/00** (2006.01)

(52) Cooperative Patent Classification (CPC):
**B29D 11/00355; B29D 11/0073; B29D 11/00961; B29D 11/0098; G02B 3/0087**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 US 202363492128 P**

(71) Applicant: **Peak Nano Optics Llc**
**Valley View, Ohio 44125 (US)**

(72) Inventors:
• **McLAUGHLIN II, Michael T.**
  **Akron, OH 44333 (US)**
• **VERAS, Johann**
  **Orlando, FL 32832 (US)**
• **LEPKOWICZ, Richard S.**
  **Great Falls, VA 22066 (US)**

(74) Representative: **Barker Brettell LLP**
**100 Hagley Road**
**Edgbaston**
**Birmingham B16 8QQ (GB)**

(54) **MANUFACTURING PROCESS OF GRADIENT INDEX LENSES**

(57) The systems, devices, and methods described herein relate to gradient-index (GRIN) lenses formed by shaping a stack of optical materials into an annealed puck (508), shaping the annealed puck (508) into a predetermined charge design (510), forming the charge design (510) into an optical preform (514), and forming the GRIN lens (516) from the optical preform (514). The steps of this process may be refined iteratively to produce a GRIN lens with a high degree of precision.

FIG. 5B

**Description**

**TECHNICAL FIELD**

The present disclosure is directed to methods, systems, and devices for producing gradient index (GRIN) lenses. In particular, the present disclosure includes manufacturing processes for precision forming GRIN lenses through the molding process by preforming an optimized preforming step on a predetermined charge design.

**BACKGROUND OF THE DISCLOSURE**

Demand for improved image quality requires increasingly complex optical systems. A recognized approach to achieving more complex systems without simply adding lens elements is to incorporate gradient index (GRIN) lenses. A GRIN lens is an inhomogeneous optical element in which the index of refraction varies over one or more dimensions of the lens.

Existing methods for forming GRIN lenses include stacking layers of optical materials together into a sheet, forming the sheet into a desired shape, and cutting a portion of the sheet into a lens. However, modern applications may require GRIN lenses formed with more precision than these methods to achieve higher optical performance. For example, machining control on the level of tens to single microns relative to a position at all points on the surface and internals of a molded plastic part or lens is beyond the scope of current methods of injection molding, coining/press-based shaping, or any solution cast and cure processes currently utilized in the industry. Furthermore, existing GRIN manufacturing methods require frequent changes in tooling to improve optical designs.

Therefore, needs exist for manufacturing processes for additional shapes and higher precision shaping of GRIN lenses.

**SUMMARY**

In some example aspects, the present disclosure introduces a method for forming a gradient-index (GRIN) lens, which may include steps for: providing an optical design of a GRIN lens; forming a GRIN material; forming the GRIN material into an annealed puck; molding the annealed puck into a pre-determined charge design; shaping the charge design into an optical preform; and forming the GRIN lens from the optical preform such that the GRIN lens conforms to the optical design.

In some implementations, the GRIN lens has a composite molded structure. The GRIN lens may be a laminate optic with near spherical iso-index contours such that $dR_0/dt \approx -1$ and $\kappa \approx 0$. A diameter of the GRIN lens may measure between 3 mm and 250 mm. In some implementations, a surface profile of the input charge is described by spherical, aspherical, planar, or freeform shapes, or by a piece-wise defined function. The input charge may include layered planar optical materials. The input charge may include a partially layered structure with suspended or captured sub-elements. The GRIN lens may be suitable for use as an objective for imaging devices including riflescopes, binoculars, spotting scopes, and cameras.

A gradient-index (GRIN) lens is also provided, which may include a laminate optic comprising a plurality of optical layers, the GRIN lens having near spherical iso-index contours such that $dR_0/dt \approx -1$ and $\kappa \approx 0$, wherein the GRIN lens has a composite structure and is shaped from an optical preform that is produced by molding a charge design.

In some implementations, a lens diameter of the GRIN lens is between 3 mm and 250 mm. The lens may be suitable for use as an objective for imaging devices including riflescopes, binoculars, spotting scopes, and cameras. The lens may be shaped from the optical preform by diamond turning.

A method for producing a (GRIN) lens is also provided, which may include steps for: providing an initial optical design for a GRIN lens; producing a charge design with a plurality of shaped optical layers; producing a first preform with the charge design; optimizing the first preform based on previously measured optical parameters to produce a second preform; and forming the GRIN lens conforming to the initial optical design from the second preform.

The method may include using artificial intelligence to optimize the first preform. The GRIN lens may have near spherical iso-index contours such that $dR_0/dt \approx -1$ and $\kappa \approx 0$. The method may include forming the GRIN lens with diamond turning from the second preform. The GRIN lens produced by the method may be suitable for use as an objective for imaging devices including riflescopes, binoculars, spotting scopes, and cameras. The input charge may include layered planar optical materials. The input charge may include a partially layered structure with suspended or captured sub-elements. In some implementations, a diameter of the GRIN lens is between 3 mm and 250 mm.

**BRIEF DESCRIPTION OF THE DRAWINGS**

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.

Fig. 1 is a diagram of three portions of optical material as known in the art.
Fig. 2A is a diagram of a portion of optical material as known in the art.
Fig. 2B is a diagram of an index of refraction of the portion of optical material in Fig. 2A having a first profile as known in the art.

Fig. 3A is a diagram of a GRIN lens formed from stacked film layers as known in the art.

Fig. 3B is a diagram of an index of refraction of the GRIN lens in Fig. 3A having a second profile as known in the art.

Fig. 4 is a diagram showing steps in a manufacturing process for GRIN lenses as known in the art.

Fig. 5A is a diagram showing steps in a manufacturing process for GRIN lenses according to one or more aspects of the present disclosure.

Fig. 5B is a diagram showing further steps in a manufacturing process for GRIN lenses according to one or more aspects of the present disclosure.

Fig. 6 is a diagram of various exemplary selected charge designs according to one or more aspects of the present disclosure.

Fig. 7A is a diagram of a near-spherical GRIN contour according to one or more aspects of the present disclosure.

Fig. 7B is another diagram of a near-spherical GRIN contour according to one or more aspects of the present disclosure.

Fig. 8 is a flow chart of an exemplary manufacturing process for GRIN lenses according to one or more aspects of the present disclosure.

Fig. 9 is a diagram of a GRIN lens design according to one or more aspects of the present disclosure.

Fig. 10 is a diagram of a first GRIN lens design according to one or more aspects of the present disclosure.

Fig. 11A is a diagram of a second GRIN lens design according to one or more aspects of the present disclosure.

Fig. 11B is a diagram showing optical data of the second GRIN lens according to one or more aspects of the present disclosure.

Fig. 12A is a diagram of a third GRIN lens design according to one or more aspects of the present disclosure.

Fig. 12B is a diagram showing optical data of the third GRIN lens according to one or more aspects of the present disclosure.

## DETAILED DESCRIPTION

The systems, devices, and methods described herein relate to manufacturing processes for producing GRIN lenses. These manufacturing process include novel steps to shape sheets of optical material including charge design and creating a preform with re-optimization. Optical design used for designing, optimizing, and reoptimizing the charge design and preform may be accomplished using artificial intelligence.

It is to be understood that the following disclosure provides many different implementations, or examples, for implementing different features of various configurations. Specific examples of components and arrangements are described below to simplify the present disclosure. These are merely examples and are not intended to be limiting. In addition, the present disclosure may repeat reference numerals and/or letters in the various examples. This repetition is for the purpose of simplicity and clarity and does not in itself dictate a relationship between the various implementations and/or configurations discussed. Moreover, the formation of a first feature over or on a second feature in the description that follows may include implementations in which the first and second features are formed in direct contact, and may also include implementations in which additional features may be formed interposing the first and second features, such that the first and second features may not be in direct contact.

The following patents and publications are incorporated herein by reference: U.S. Patent 7,002,754, U.S. Patent 9,435,918, U.S. Patent 8,902,508, U.S. Patent Application 2018/0133988, U.S. Patent 11,002,720, U.S. Patent 4,902,650, U.S. Patent USH1321H, U.S. Patent 4,900,138, U.S. Patent Application 2021/0246066, and U.S. Patent 10,059,810.

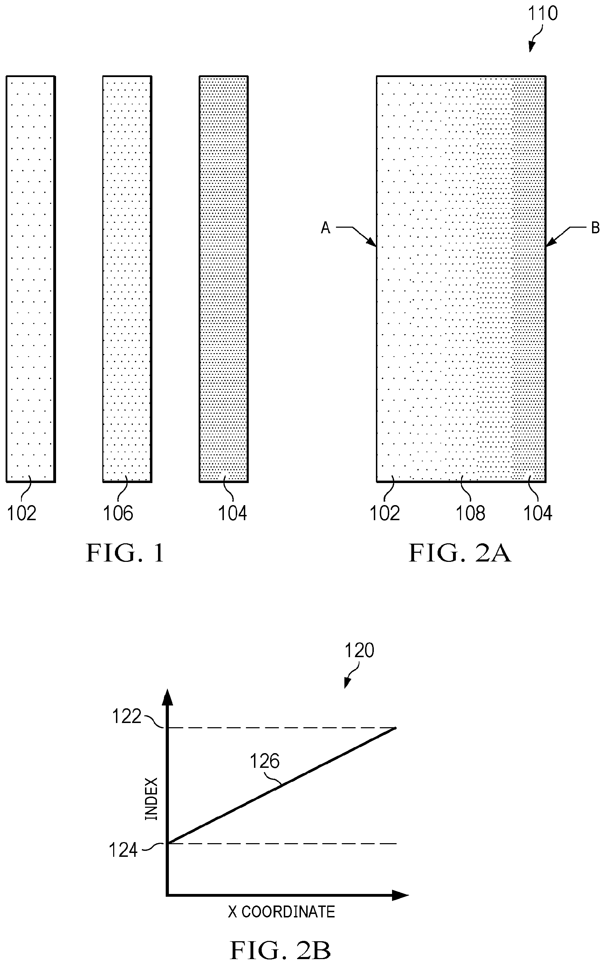

Fig. 1 is a diagram of three portions of optical material that may be used in a conventional GRIN lens as known in the art. GRIN optical elements may include a first optical material 102, a second optical material 104, and a transition 106 including a mixture of the first and second optical materials 102, 104. GRIN optical elements such as lenses may be formed using optical materials in one or more gradient portions such as the gradient portion 110 shown in Fig. 2A. For example, the gradient portion 110 (which may be part of a GRIN lens) may include a first optical material 102 at a first surface A, a second optical material 104 at a second surface B, and a transition 108 between the first optical material 102 and a second optical material 104.

Many conventional GRIN lenses include flat or nearly flat (also referred to as planar) surfaces and may minimize aberrations present in spherical lenses. Fig. 2B shows a graph 120 of the index of refraction along the x-coordinate of the gradient portion 110 of Fig. 2A. The first optical material 102 may have a first value 124 of index of refraction and the second optical material 104 may have a second value 122 of index of refraction (higher than the first index of refraction in this example). The profile 126 of the index of refraction changes gradually over the x-axis of the gradient portion 110, changing from the lower value 124 of index of refraction at surface A to the higher value 122 of index of refraction at surface B. In some implementations, the profile 126 in the index of refraction includes a smooth transition including one or more linear, logarithmic, exponential, or other curved shapes. The GRIN lenses discussed herein may include any of the above profiles, and in particular, may include a transition between different index of refraction values, for example where the index of refraction varies smoothly, discontinuously, cyclically, or with other graduated change, which might also include any, or some, homogeneous part of the GRIN profile as well. The shape of the GRIN lenses discussed herein include curved surfaces (convex and concave) and may have aspherics, freeform shapes, or diffractives on the various surfaces.

GRIN lenses may include a number of layers with varying indices of refraction stacked together. In the following disclosure, In some embodiments, the layers of a GRIN lens are formed from polymers and have such small thicknesses and are stacked in such great numbers that the index of refraction of the GRIN lens transitions smoothly between values. GRIN lenses may be designed and fabricated to possess application-specific characteristics such as having one or more aspheric surfaces and particular volumetric gradient index distributions. GRIN lenses as discussed herein may layers of plastic, layered polymeric optics with inorganic dopants or fillers, lenses made with inorganic fillers and dyes in the layers, layers formed from inorganic glasses laminated into a lens, or a mix of polymers and inorganic glass layers, as well as mixtures of any of the above. As discussed here, GRIN lenses covers these exemplary types but is not limited to those, any and all past, or any and all currently existing, and, moreover, could have direct applicability in the same way as described to any, all, or some future and even yet undeveloped eyepiece designs which themselves might, or might not include other GRIN technologies as described herein. In some implementations, optical design for eyepieces with GRIN elements could include, but is not limited to, athermalized design and performance over and wide range of operational temperatures appropriately defined by the thermal behavior of optical and mechanical materials employed in the optical design and fabrication of such eyepieces. GRIN lenses may be singular or multiple in use, and may be fabricated to fit within both existing optical eyepiece designs as "correctors" and, or, be designed as other lenses which are part of entirely unique and new optical eyepiece designs, to give significantly enhanced performance compared to eyepieces which do not have GRIN lenses. In some implementations, the GRIN lenses discussed herein may have a diameter measuring between 3 and 250 mm and may include optical material operating in the 350-2000 nm wavelength space. In other implementations, the optical materials are configured for other ranges of wavelengths, such as 400-1000 nm, 1000-2000 nm, and 100-2000 nm.

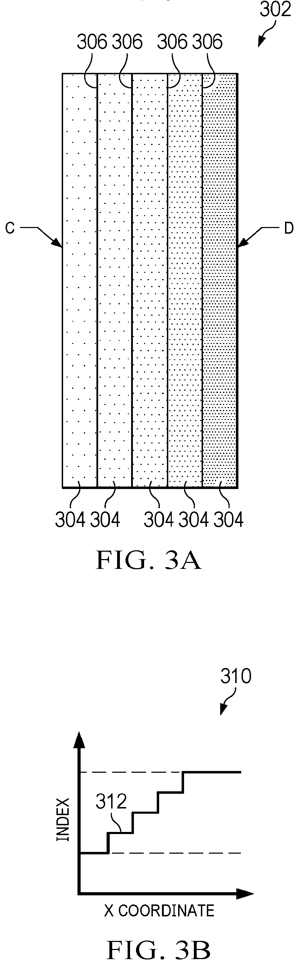

Processing methods for GRIN lenses have typically been aimed at providing a continuously varying index of refraction profile throughout the volume of the lens. However, conventional GRIN lenses are also made with a series of layers each having an individual index of refraction, as shown in Fig. 3A. In this case, GRIN optics may include a layered structure with a smoothly varying relationship between multiple layers and their shapes. For flat films, this can be visualized in Fig. 3A by a GRIN lens 302 formed by stacking film layers 304 together and ensuring that all space is filled between a front surface C and back surface D. In some cases, the refractive index in any one film layer 304 is homogeneous such that the variation in refractive index allowed is the difference between refractive indices associated with each film. This may produce a stepped index of refraction profile 312 as shown in the graph 310 of Fig. 3B.

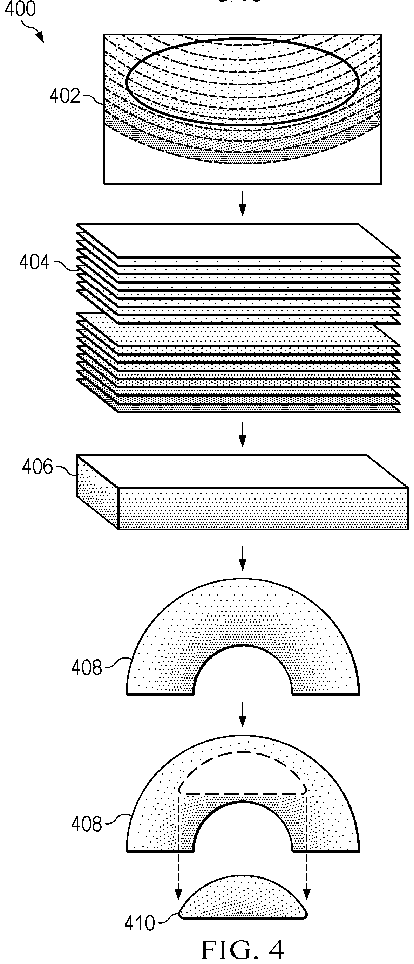

A current lens design and manufacturing process 400 of GRIN lenses is shown in Fig. 4. In particular, the current manufacturing process 400 of for a GRIN lens typically begins with an optical lens design 402 for the finished GRIN lens. This optical lens design 402 may include ray tracing to optimize part performance over a desired field of view and performance wavelength. The next step in the manufacturing process 400 may be discretization of laminate lens design into integral prescription to form a planar stack 404 of desired refractive index or material composition. After the stack 404 is formed, the stack 404 may be processed to achieve consolidation of the loose stack of films into a cohesive planar block 406 of material for further processing, such as by a lamination process. This planar block 406 of material may then be shaped into a preform 408 in a molding process. Finally, a GRIN lens 410 may be produced from the preform 408.

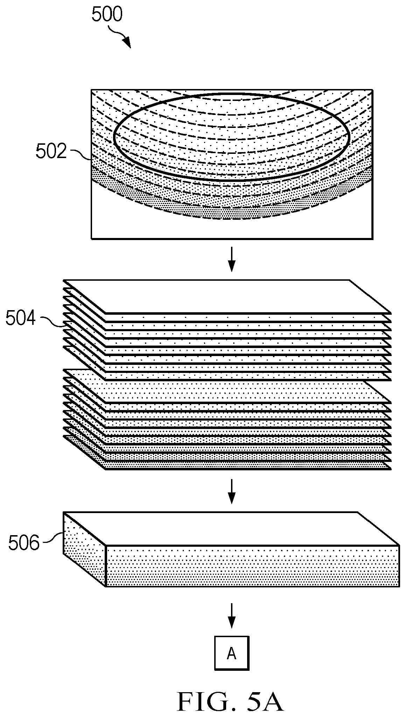

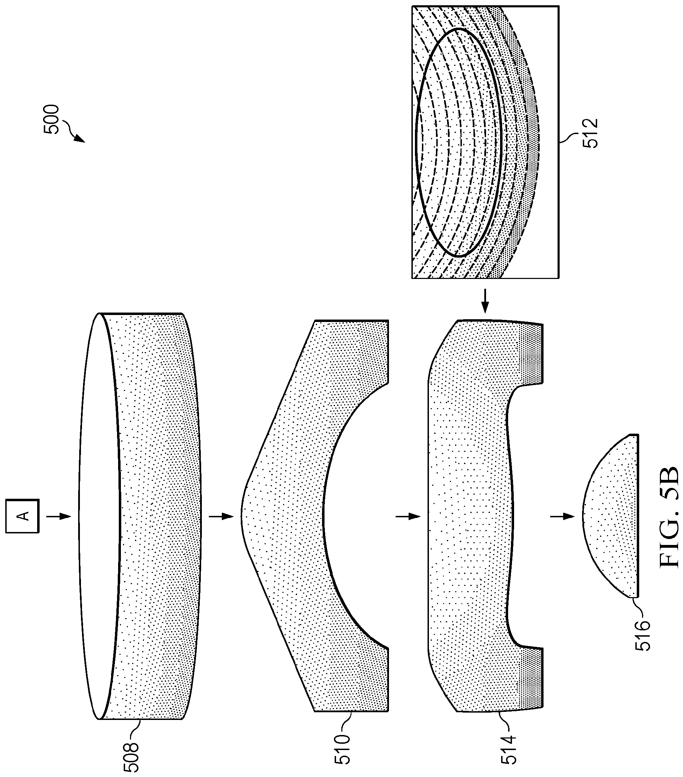

Figs. 5A and 5B show a design and manufacturing process 500 for GRIN lenses according to the present invention. This process may include steps for optical design 502, forming a stack 504 of optical material, and forming the stack 504 into a cohesive planar block 406, which in some implementations, may be similar to the steps of process 400 in Fig. 4. These steps 502, 504, 506 may proceed to step A as shown.

In Fig. 5B, the process 500 may continue with a molding process to produce an annealed puck 508, which may be formed into a charge design 510, and finally into a preform 514. In some implementations, the puck 508 is processed in an annealing process to produce an annealed puck 508. The annealed puck 508 may be shaped by altering its geometry from a planar block to a prescribed design geometry of laminated optical material to achieve non-symmetric deformation of optic during molding.

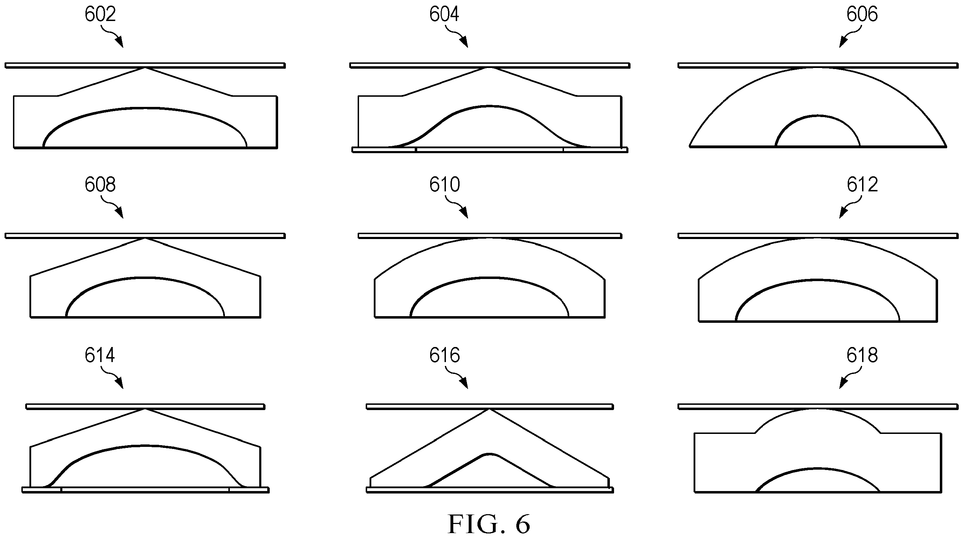

In some implementations, the annealed puck may be formed into a charge design 510. The charge design may a predetermined shape that functions as a design variable to optimize the finished lens internal structure and optical performance. Fig. 6 shows a number of possible charge designs 602, 604, 606, 608, 610, 612, 614, 616, 618 that may be used as a starting place for various desired final lens designs. These selected examples 602-618 may result from the same GRIN profile and show a wide range of possible designs. Some of these designs utilize curves of varies radii on their top and bottom surfaces, as well as linear shapes. Other examples of charge designs are contemplated using different GRIN profiles as well as different starting shapes on the tops and bottoms of the profiles.

Returning to Fig. 5B, the charge shape 510 may be shaped into a preform 514. In some implementations, the GRIN profile and structure of the preform 514 are both functions of the charge shape 510 and the GRIN profile of the annealed puck 508. The preform 514 may represent an intermediate step that may be systematically optimized with input optical designs 512 based on experimentally measured parameters. The results of these optimized parameters may be used to create manufacturing directions for a recipe to create a GRIN optic from raw materials. In some implementations, artificial intelligence (AI) is utilized in these optimization steps, such as to predict which charge design 510 will most provide the most efficient starting place for a selected GRIN design. Experimental results from other design processes may be input into the AI program to aid in its effectiveness in selecting starting charge designs 510 and subsequently optimizing designs to arrive at the final GRIN design.

The preform 514 may be shaped into a GRIN lens 516 as a final step in the process 500. In some implementations, the process and lens parts fabricated through the above process can achieve a near-spherical or spherical internal refractive index and/or iso-material composition contours as opposed to previously achieved conic shaped deformation from previous, traditional lamination and molding processes. Spherical or nearly-spherical curvatures in the GRIN lenses of the present invention may be created on the GRIN optic external surface and propagated throughout the internal volume of the GRIN optic.

Additionally, the GRIN lenses produced through process 500 are highly repeatable and can be highly symmetric. The process 500 may also aid in decreasing tooling costs because the use of charge designs and preforms may allow for various different lens designs without having to change the tooling for lens production. Process 500 may also provide tooling control on the level of tens to single microns relative to a position at all points on the GRIN optic surface and internal structure of the GRIN optic. The capability to achieve micron resolution is currently beyond the scope of currently available lens injection molding, coining/press-based shaping, or any solution cast and cure processes currently utilized in the industry.

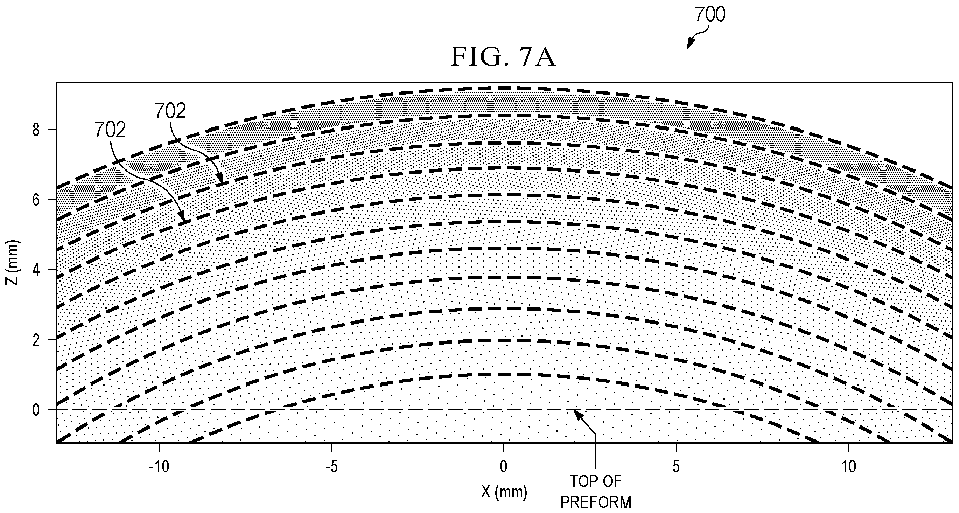

An exemplary GRIN design 700 produced by method 500 (shown in Figs. 5A and 5B) is shown in Fig. 7A. This design achieves a high level of precision and is very close to spherical. It was achieved through a combination of empirical measurements and predictive tools including more than 30 virtual iterations and two physical iterations. Key laminated lens design variables are given for curvature ($R_0$), concentricity (i.e., the rate of change of the curvature) ($dR_0/dt$), and sphericity (also defining an overall conic shape) ($\kappa$). The geometrical shape of the resulting iso-indicial surfaces from the molding process of the charge 510 can be described by a parametrized continuous family of conical surfaces with a high degree of accuracy. Each member of the family of conical surfaces is a function $z = f(x, y)$ parameterized by a vertex position t, a radius of curvature R(t), and a conic constant $\kappa$ as follows:

$$f(x,y) = t + \frac{\frac{r^2}{R(t)}}{1 + \sqrt{1 - \frac{(\kappa+1)r^2}{R(t)^2}}}$$

where $r^2 = x^2 + y^2$. Moreover, the radius of curvature of any surface in the family is determined by its vertex position t, and the constant rate of change of the radius of curvature, $\frac{dR_0}{dt}$, via the linear relation $R(t) = \frac{dR_0}{dt} + R_0$ where $R_0$ is the radius of curvature of the surface with its vertex at t = 0. The surfaces of the preform 514 are normal at its vertex to a common axis that may be denoted the t-axis. Typically, this normal axis is aligned with the z-axis in a right-handed coordinate system.

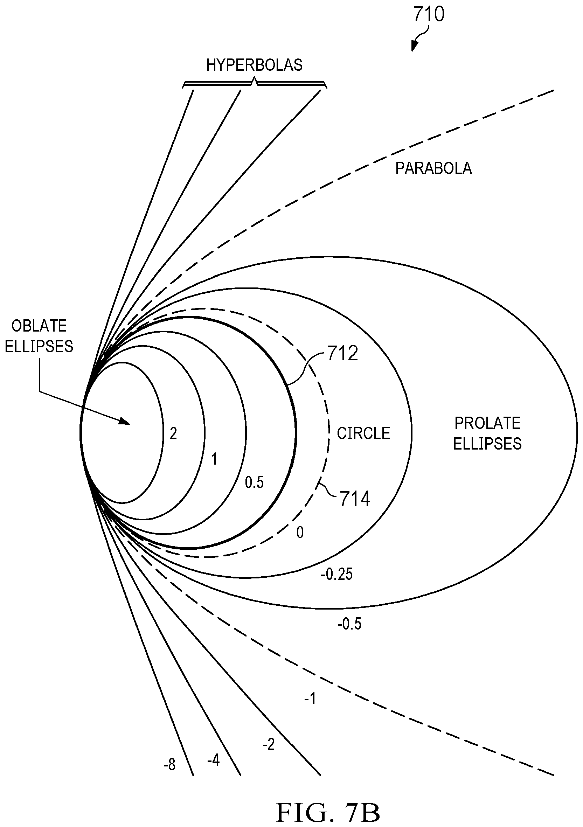

In the example of Fig. 7, the contours 702 of the GRIN design 700 are nearly spherical, meeting the ($dR_0/dt \approx$ -1). The target design for this GRIN lens was $R_0$ = -20mm, ($dR_0/dt$ = -1), and $\kappa$ = 0. The outcome of the process yielded a GRIN design 700 with $R_0$ = -21.6913mm, ($dR_0/dt$ = -1.0119), and $\kappa$ = 0.29868. As shown in the diagram 710 of Fig. 7B, an ellipse 712 with the value of $\kappa$ = 0.29 is very close to spherical 714 ($\kappa$ = 0). The results shown by GRIN design 700 are optimized through lens software design code 512 (discussed in process 500) to achieve a more spherical controlled location for individually laminated internal polymer layers in optics that are not possible with current techniques for forming GRIN lenses.

Creation of this nearly spherically continuum of radii through the lens volume may enable production of high performance focusing optics beyond the traditional layered GRIN manufacturing techniques for the target applications of imaging lenses for eye-piece, objective, and telescopic applications. In other implementations, the GRIN lenses produced by the present disclosure have other shapes, such as elliptic, parabolic, and hyperbolic shapes. The GRIN lenses may be formed with a wide range of curves made possible by the flexible design parameters of the present disclosure. In some implementations, these shapes have a $dR_0$/dt value of between -4 and 1, between -2.1 and 1, between -2 and 0, and between -1 and 0. The current technology applies not only to gradient refractive index lenses, but to a wider glass of material doublets, triplets, etc., that can be fabricated to have a non-continuous but stepwise varying optic. Additional applications would include functionalized laminate optics that include layers of optical filtering material, doped dye films, or nanoparticle additives to provide an optical enhancement including light filtering, wavelength shifts, or light steering.

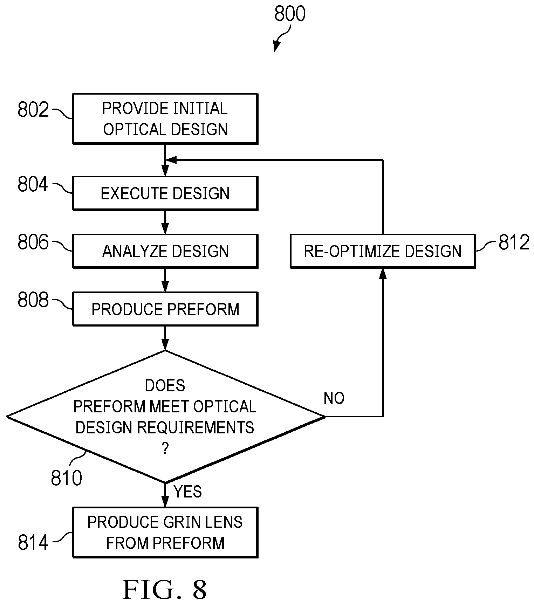

Fig. 8 is a flow chart of an exemplary manufacturing process 800 for GRIN lenses according to one or more aspects of the present disclosure. This process 800 may be carried out through the steps shown in Figs. 5A and 5B of process 500. In some implementations, the process begins with providing an initial optical design 802. This design may be based on optical requirements for a final GRIN lens. At step 804, the design may be executed by forming a physical design, for example, by providing a charge design. This physical design may be analyzed in step 806 to determine if it meets optical requirements for the design. At step 808, a preform may be produced from the physical design. This preform may be similar to the preform 514 discussed with reference to Fig. 5B. At step 810, the method 800 may include determining if the preform meets optical design requirements provided by the initial design 802. If so, a GRIN lens is produced form the preform in step 814. If the preform does not meet the optical design requirements, the method includes a step 812 to re-optimize the design, which is then executed by returning to step 804. In this way, the optical designs are constantly refined by the method 800 to eventually produce a lens that meets the lens requirements. The re-optimization step 812 may include the use of previously collected data from lens design procedures to improve the optical designs, and may also include the use of AI. In some implementations, the re-optimization step is an iterative method that uses predictive models such as FEA, polymer flow, and statistical analysis to refine the optical design.

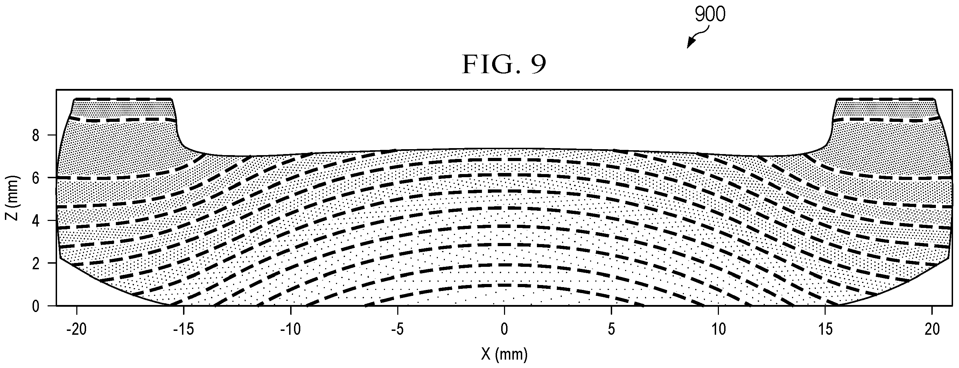

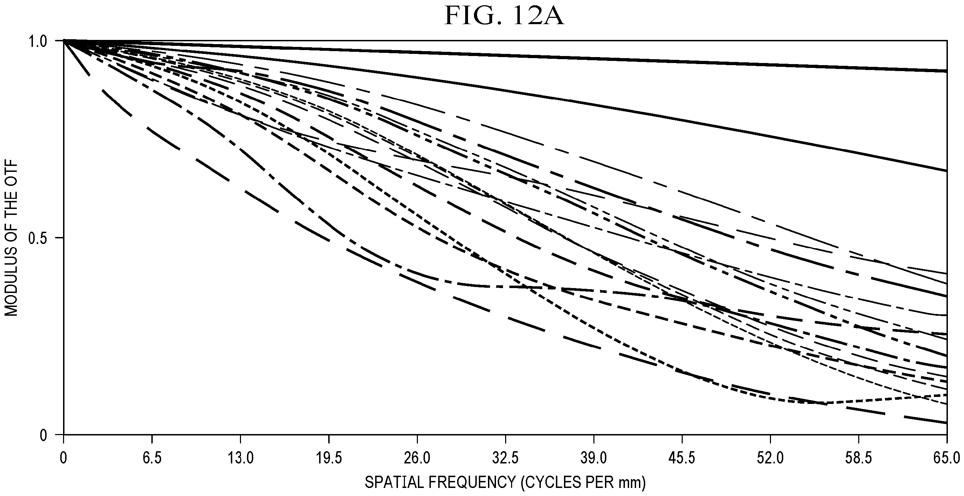

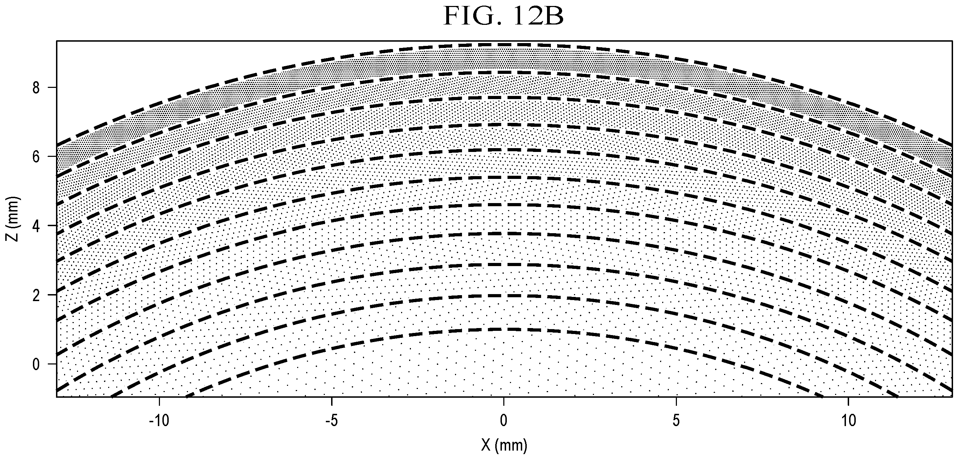

Fig. 9 shows an additional exemplary preform optical design 900 that maybe formed by following the steps of process 500 or method 800. In particular, this preform design 900 may be formed from a charge design and may be used to produce a GRIN lens, for example by diamond turning. The performance of optical design 900 is shown in Figs. 12A and 12B, in which the optical design 900 has been improved by re-optimization through the steps of the present disclosure.

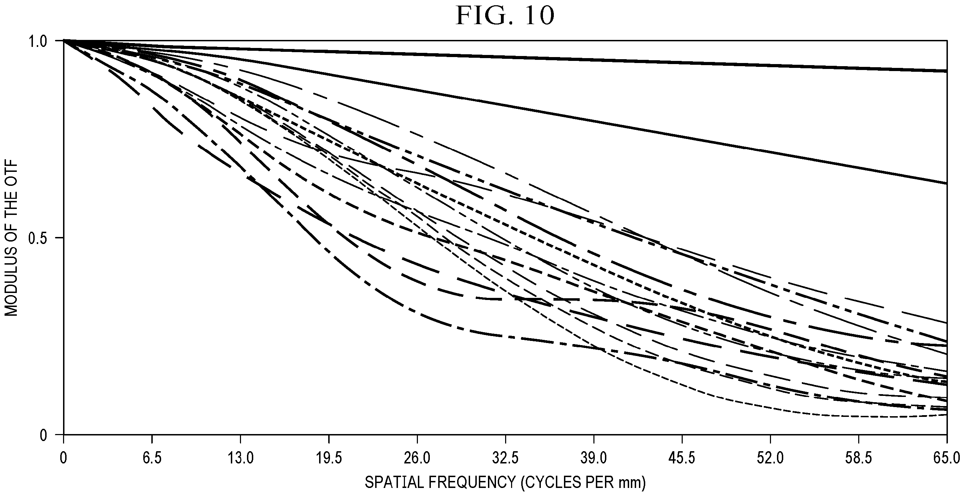

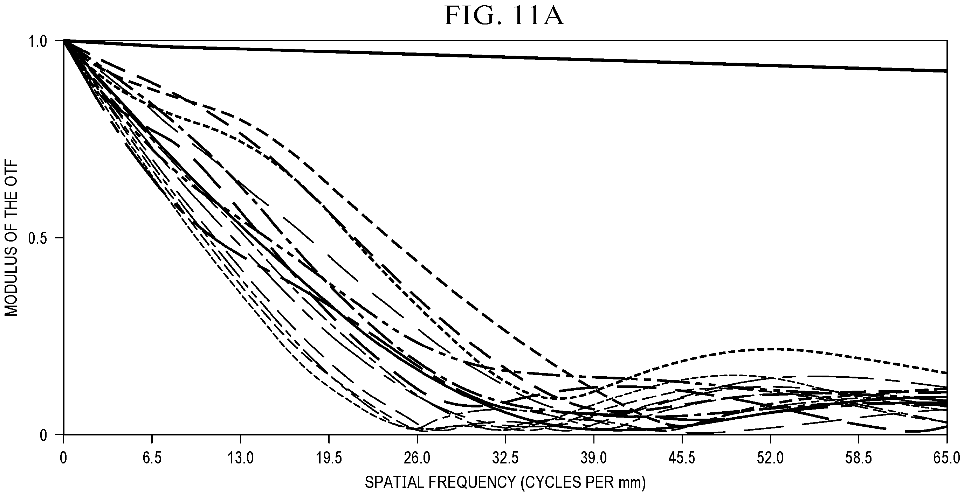

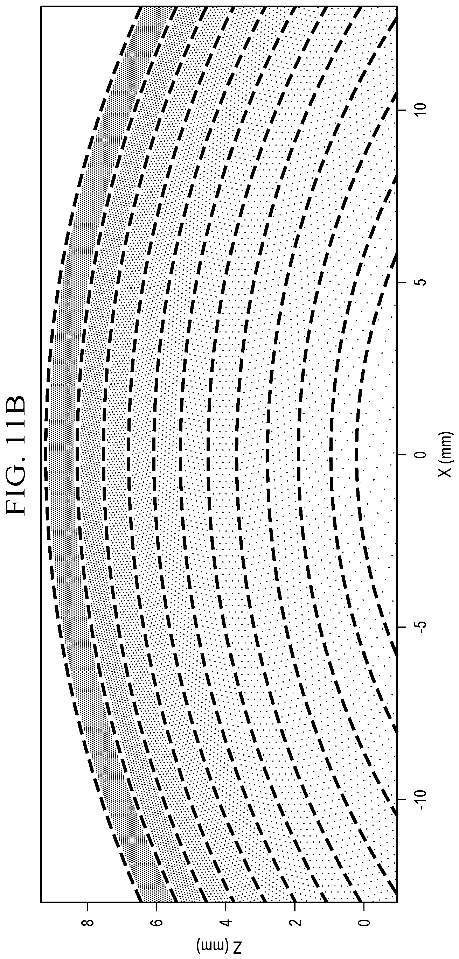

Figs. 10-12B show various steps to carry out an optical design for a GRIN lens according to aspects of the present invention. This optical design describes the laminated layered optic performance for a night vision imaging device. Fig. 11A and 11B shows the performance of a lens produced by currently available manufacturing processes, while Figs. 12A and 12B show a re-optimized manufactured laminate lens according to aspects of the present invention. Drastic improvements are shown in Figs. 12A and 12B (as compared to Figs. 10, 11A, and 11B), which has a $\kappa$ value much closer to zero and more spherical contours.

The processes and methods described above provide for the ability to maintaining precision control of GRIN material in a specific orientation, i.e., spherical contours, requires three-dimensional control of viscoelastic material deformation during production of a GRIN lens. This disclosure applies not only to gradient refractive index lenses, but to a wider glass of material doublets, triplets, etc., that can be fabricated to have a non-continuous but stepwise varying optic. Additional applications include functionalized laminate optics that include layers of optical filtering material, doped dye films, and nanoparticle additives to provide an optical enhancement including light filtering, wavelength shifts, or light steering. Previously documented GRIN manufacturing techniques included in the prior art have not been successful at controlling the internal refractive index distribution shape to demonstrated high degree of sphericity required and achieved from this process. The ability to introduce variable geometry laminate charges also enables a wider range of refractive index profiles curvatures to be molded as compared to the conventional "mated mold" coining process to deform material against a piston and cavity cell. Complex shapes and distributions can now be achieved without the capital and time investment for mold hardware as the design process moves this onus onto the laminate charge machining step prior to molding. Products created via this process outperform previous molded parts in optical MTF, contrast, and image resolution enabling higher definition camera systems with wider resolvable field of views to be realized.

The foregoing outlines features of several implementations so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the implementations introduced herein. One of ordinary skill in the art should also realize that such equivalent constructions do not depart from the spirit and scope of the present disclosure, and that they may make various changes, substitutions and alterations herein without departing from the spirit and scope of the present disclosure.

The Abstract at the end of this disclosure is provided to comply with 37 C.F.R. § 1.72(b) to allow the reader to quickly ascertain the nature of the technical disclosure. It is submitted with the understanding that it will not be used to interpret or limit the scope or meaning of the claims.

Moreover, it is the express intention of the applicant not to invoke 35 U.S.C. §112(f) for any limitations of any of the claims herein, except for those in which the claim expressly uses the word "means" together with an associated function.

**Claims**

**1.** A method for forming a gradient-index (GRIN) lens, comprising:

> providing an optical design of a GRIN lens;
> forming a GRIN material;
> forming the GRIN material into an annealed puck;
> shaping the annealed puck into a pre-determined charge design;
> shaping the charge design into an optical preform; and
> forming the GRIN lens from the optical preform such that the GRIN lens conforms to the optical design.

2. A method for producing a (GRIN) lens, comprising:

> providing an initial optical design for a GRIN lens;
> producing a charge design with a plurality of shaped optical layers;
> producing a first preform with the charge design;
> optimizing the first preform based on previously measured optical parameters to produce a second preform; and
> forming the GRIN lens conforming to the initial optical design from the second preform.

3. The method of claim 2, further comprising the use of artificial intelligence to optimize the first preform.

4. The method of claim 2 or claim 3, further comprising forming the GRIN lens with diamond turning from the second preform.

5. The method of any preceding claim, wherein the GRIN lens has near spherical iso-index contours such that $dR_0/dt \approx -1$ and $\kappa \approx 0$.

6. The method of any preceding claim, wherein the GRIN lens is suitable for use as an objective for imaging devices including riflescopes, binoculars, spotting scopes, and cameras.

7. The method of any preceding claim, wherein the charge design comprises layered planar optical materials and/or a partially layered structure with suspended or captured sub-elements.

8. The method of any preceding claim, wherein a diameter of the GRIN lens is between 3 mm and 250 mm.

9. The method of any preceding claim, wherein the GRIN lens has a composite molded structure.

10. The method of any preceding claim, wherein the GRIN lens is a laminate optic with near spherical iso-index contours such that $dR_0/dt \approx -1$ and $\kappa \approx 0$.

11. The method of any preceding claim, wherein a surface profile of the charge design is described by spherical, aspherical, planar, or freeform shapes, or by a piece-wise defined function.

12. A gradient-index (GRIN) lens, comprising:
a laminate optic comprising a plurality of optical layers, the GRIN lens having near spherical iso-index contours such that $dR_0/dt \approx -1$ and $\kappa \approx 0$, wherein the GRIN lens has a composite structure and is shaped from an optical preform that is produced by molding a charge design.

13. The GRIN lens of claim 12, wherein a lens diameter is between 3 mm and 250 mm.

14. The GRIN lens of claim 12 or claim 13, wherein the lens is suitable for use as an objective for imaging devices including riflescopes, binoculars, spotting scopes, and cameras.

15. The GRIN lens of any of claims 12 to 14, wherein the lens is shaped from the optical preform by diamond turning.

FIG. 1

FIG. 2A

FIG. 2B

302

306 306   306 306

C                    D

304 304   304 304 304

FIG. 3A

310

INDEX

312

X COORDINATE

FIG. 3B

FIG. 4

FIG. 5A

500

512

508

510

514

516

A

FIG. 5B

EP 4 434 736 A1

602

604

606

608

610

612

614

616

618

FIG. 6

FIG. 7A

FIG. 7B

800

| 802 | PROVIDE INITIAL OPTICAL DESIGN |

| 804 | EXECUTE DESIGN |

| 806 | ANALYZE DESIGN |

| 812 | RE-OPTIMIZE DESIGN |

| 808 | PRODUCE PREFORM |

DOES PREFORM MEET OPTICAL DESIGN REQUIREMENTS ?

810

NO

YES

| 814 | PRODUCE GRIN LENS FROM PREFORM |

FIG. 8

FIG. 9

900

EP 4 434 736 A1

FIG. 10

# FIG. 11A

EP 4 434 736 A1

FIG. 12A

MODULUS OF THE OTF

SPATIAL FREQUENCY (CYCLES PER mm)

## FIG. 12B

Europäisches
Patentamt

European
Patent Office

Office européen
des brevets

**EUROPEAN SEARCH REPORT**

Application Number

EP 24 16 3679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEADIE G ET AL: "Multilayer polymer GRIN singlets: manufacturing and performance", PROCEEDINGS OF THE SPIE, SPIE, US, vol. 12078, 19 November 2021 (2021-11-19), pages 1207811-1207811, XP060150720, ISSN: 0277-786X, DOI: 10.1117/12.2603646 ISBN: 978-1-5106-5738-0 | 2-15 | INV. B29D11/00 G02B3/00 |
| A | * abstract * * pages 1-3 * * page 1, paragraph 4 - page 2, paragraph 1 * * page 2, paragraph 2-3 * * page 3, paragraph 1-4 * ----- | 1 | |
| X | US 2013/194677 A1 (PONTING MICHAEL T [US]) 1 August 2013 (2013-08-01) * abstract * * figures 1-4B * * paragraphs [0050] - [0053] * ----- | 12-15 | |
| X | US 2012/206796 A1 (GIBSON DANIEL J [US] ET AL) 16 August 2012 (2012-08-16) * abstract * * figures 1-2 * * paragraphs [0017] - [0022] * ----- | 12-15 | TECHNICAL FIELDS SEARCHED (IPC) B29D G02B |
| X | US 2021/026042 A1 (BEADIE GUY [US] ET AL) 28 January 2021 (2021-01-28) | 12-14 | |
| A | * abstract * * figures 1-12 * ----- | 15 | |

The present search report has been drawn up for all claims

| Place of search | Date of completion of the search | Examiner |
|---|---|---|
| The Hague | 23 July 2024 | Heckmann, Paul |

EPO FORM 1503 03.82 (P04C01)

## ANNEX TO THE EUROPEAN SEARCH REPORT
## ON EUROPEAN PATENT APPLICATION NO.

EP 24 16 3679

This annex lists the patent family members relating to the patent documents cited in  the above-mentioned European search report.
The members are as contained in the European Patent Office EDP file on
The European Patent Office is in no way liable for these particulars which are merely given for the purpose of information.

23-07-2024

| Patent document cited in search report | Publication date | Patent family member(s) | Publication date |
|---|---|---|---|
| US 2013194677 A1 | 01-08-2013 | NONE | |
| US 2012206796 A1 | 16-08-2012 | NONE | |
| US 2021026042 A1 | 28-01-2021 | NONE | |

EPO FORM P0459

For more details about this annex : see Official Journal of the European Patent Office, No. 12/82

**REFERENCES CITED IN THE DESCRIPTION**

**Patent documents cited in the description**

- US 7002754 B
- US 9435918 B
- US 8902508 B
- US 20180133988 A
- US 11002720 B
- US 4902650 A
- US 4900138 A
- US 20210246066 A
- US 10059810 B